# EUROPÄISCHE PATENTSCHRIFT

(11) **EP 2 593 706 B1**
(45) Veröffentlichungstag und Bekanntmachung des Hinweises auf die Patenterteilung: **13.08.2014**
(21) Anmeldenummer: 11729919.8
(22) Anmeldetag: 30.06.2011
(51) Int. Cl.: F16L 53/00

(54) **VORRICHTUNG ZUM VERBINDEN EINES LEITUNGSELEMENTS MIT EINER KOMPONENTE**
DEVICE FOR CONNECTING A LINE ELEMENT TO A COMPONENT
DISPOSITIF POUR RACCORDER UN ÉLÉMENT DE CONDUITE À UN COMPOSANT

(30) Priorität: 12.07.2010 DE 102010026827
(43) Veröffentlichungstag der Anmeldung: 22.05.2013
(73) Patentinhaber: Daimler AG, 70327 Stuttgart (DE)
(72) Erfinder: BAUR, Thomas, 73235 Weilheim (DE); STEIN, Boris, 73230 Kirchheim (DE); STEINHÜBL, Simon, 73271 Holzmaden (DE)
(74) Vertreter: JENSEN & SON
(86) Internationale Anmeldenummer: PCT/EP2011/003250
(87) Internationale Veröffentlichungsnummer: WO 2012/007109

(56) Entgegenhaltungen:
- EP-A2- 0 206 825
- US-A- 3 612 577
- US-A1- 2007 036 528

## Beschreibung

Die Erfindung betrifft eine Vorrichtung zum Verbinden eines Leitungselements mit einer Komponente nach der im Oberbegriff von Anspruch 1 näher definierten Art. Außerdem betrifft die Erfindung ein Brennstoffzellensystem mit wenigstens einer Komponente, welches ein derartiges Leitungselement aufweist.

Aus der DE 10 2007 009 898 A1 ist ein Heizsystem für ein Rohr oder einen Schlauch in einem Brennstoffzellensystem bekannt. Um zu verhindern, dass Wasser in dem Rohr oder Schlauch gefriert, ist ein Heizdraht vorgesehen, welcher in Kontakt mit dem Rohr oder Schlauch steht. Dieses ist beispielsweise mit einem Heizdraht umwickelt, welcher über eine Schutzschicht an dem Rohr befestigt ist. Außerdem kann eine thermische Isolierung vorgesehen sein.

Die Problematik bei diesem Aufbau liegt nun darin, dass das Rohr selbst beheizt werden kann. Im Bereich von eventuellen Verbindungselementen wird die Beheizung dabei schwierig, insbesondere wenn das beheizte Leitungselement an eine unbeheizte Komponente, beispielsweise einen Brennstoffzellenstack, einen Reaktor, einen Wasserabscheider oder Ähnliches, angeschlossen wird. In diesem Bereich kann es dann zu einer Auskondensation und zum Gefrieren von flüssigem Wasser kommen, da lediglich die umgebenden Rohrleitungen beheizt werden können und dieser Bereich der Verbindung nicht beheizt ist.

Aus der US 3 612 577 ist eine Vorrichtung zum Verbinden eines Leitungselements mit einer Komponente offenbart, die alle Merkmale des Oberbegriffs des Anspruchs 1 enthält.

Es ist daher die Aufgabe der hier vorliegenden Erfindung eine Vorrichtung zum Verbinden eines Leitungselements mit einer Komponente zu schaffen, welche so ausgebildet ist, dass sie die oben genannten Nachteile vermeidet und eine Verbindung sicherstellt, welche das Auskondensieren und das eventuelle Einfrieren von Flüssigkeit aus dem in dem Leitungselement geförderten Medium vermeidet.

Erfindungsgemäß wird diese Aufgabe durch die Vorrichtung mit den Merkmalen im kennzeichnenden Teil des Anspruchs 1 gelöst. Weitere vorteilhafte Ausgestaltungen der erfindungsgemäßen Vorrichtung ergeben sich dabei aus den restlichen abhängigen Unteransprüchen. Außerdem löst ein Brennstoffzellensystem gemäß Anspruch 11 die oben genannte Aufgabe.

Die erfindungsgemäße Vorrichtung zum Verbinden eines Leitungselements mit einer Komponente sieht vor, dass das Leitungselement in einem Verbindungsgehäuse endet oder mit einem solchen fest verbunden ist. Dieses Verbindungsgehäuse selbst weist dann geeignete Mittel zur lösbaren Befestigung an der Komponente auf. Dies können beispielsweise herkömmliche Schraubenmittel sein, welche mit einem Flansch zusammenwirken. Außerdem wären andere lösbare Verbindungsmittel denkbar, beispielsweise Steckverbindungen mit mechanischer Verriegelung, wie sie insbesondere über das SAE-Papier J 2044 beschrieben werden.

Erfindungsgemäß ist es dabei vorgesehen, dass ein im Verbindungsgehäuse verlaufender Leitungsabschnitt über einen elektrischen Heizdraht, welcher diesen von außen umgibt, beheizt ist. Der beheizte Leitungsabschnitt ragt dabei in Richtung der Komponente so weit über den Bereich zur lösbaren Befestigung des Verbindungsgehäuses an der Komponente hinaus, dass der Leitungsabschnitt in dem Innenraum der Komponente endet.

Die erfindungsgemäße Vorrichtung ermöglicht es so, die zu transportierenden Medien auch im Bereich der Komponentenschnittstelle beziehungsweise der Anbindung des Leitungselements an eine Komponente zu beheizen beziehungsweise gegebenenfalls in diesem Bereich gefrorenes Medium aufzutauen. Durch den Überstand des Leitungsabschnitts in den Innenraum der Komponente kann außerdem erreicht werden, dass im Bereich der gegebenenfalls kühlen Wand der Komponente entstehendes auskondensierendes Medium beim Herabrinnen entlang der Wand nicht in das Leitungselement beziehungsweise den Leitungsabschnitt eindringt. Dadurch kann der sichere und zuverlässige Transport von Medien mit dem Leitungselement zu der Komponenten sichergestellt werden.

In einer besonders günstigen und vorteilhaften Weiterbildung der Erfindung ist es dabei vorgesehen, dass das Material des Verbindungsgehäuses den beheizten Leitungsabschnitt und den Heizdraht auf der gesamten Länge des Leitungsabschnitts umschließt. Der Leitungsabschnitt kann so entsprechend von außen mit dem Heizdraht umwickelt werden, sodass keine Reaktion eines im Leitungsabschnitt geführten Mediums mit dem gegebenenfalls sehr heißen Heizdraht auftreten kann. Außerdem kann dadurch, dass das Material des Verbindungsgehäuses sowohl den Heizdraht als auch den Leitungsabschnitt umgibt, dieser entsprechend gegen Beschädigungen geschützt werden. Das Verbindungsgehäuse beziehungsweise das Material des Verbindungsgehäuses bildet so eine Schutzschicht um den mit dem Heizdraht versehenen Leitungsabschnitt. Dieser ist dann vor mechanischen Beschädigungen geschützt, sodass die Beheizung sicher und zuverlässig gewährleistet werden kann.

In einer weiteren vorteilhaften Ausgestaltung der erfindungsgemäßen Vorrichtung ist es außerdem vorgesehen, dass das Verbindungsgehäuse aus einem elektrisch nicht leitenden Material ausgebildet ist. Ein solches Verbindungsgehäuse aus einem elektrisch nicht leitenden Material kann zusätzlich oder alternativ zu dem oben genannten mechanischen Schutz des Leitungselements und/oder Heizdrahts außerdem eine elektrische Isolierung des Heizdrahts gegenüber der Umgebung übernehmen, sodass neben dem Heizdraht und dem Leitungsabschnitt lediglich das Material des Verbindungsgehäuses als dritte Schicht notwendig ist. Der Aufbau ist entsprechend einfach und kann kostengünstig realisiert werden.

In einer vorteilhaften Weiterbildung der erfindungsgemäßen Vorrichtung ist es ferner vorgesehen, dass das Verbindungsgehäuse einstückig mit dem Leitungselement ausgebildet ist. Ein solcher Aufbau kann beispielsweise dann genutzt werden, wenn Leitungselemente mit vorgefertigter Länge in vergleichsweise großen Stückzahlen eingesetzt werden. Dann lässt sich das Leitungselement und das Verbindungsgehäuse leicht einstückig ausbilden, sodass im Bereich, in dem das Leitungselement in das Verbindungsgehäuse übergeht, keine zusätzlichen Schnittstellen entstehen, welche hinsichtlich Dichtheit und gegebenenfalls hinsichtlich der Weiterleitung von elektrischer Heizleistung aus dem Bereich des Verbindungsgehäuses in den Bereich des Leitungselements kritisch sein könnten.

In einer besonders günstigen Ausgestaltung der erfindungsgemäßen Vorrichtung kann es außerdem vorgesehen sein, dass das Verbindungsgehäuse als Spritzgussteil ausgebildet ist, welches ein Ende des Leitungselements und den Leitungsabschnitt am Außenumfang umschließt. Ein solcher Aufbau als Spritzgussteil, insbesondere aus Kunststoff, kann einfach genutzt werden, um ein vergleichsweise stabiles und kostengünstiges Verbindungsgehäuse herzustellen, wenn entsprechend hohe Stückzahlen für das Verbindungsgehäuse benötigt werden. Dadurch, dass das Verbindungsgehäuse beziehungsweise das Spritzgussmaterial des Verbindungsgehäuses ein Ende des Leitungselements und den Leitungsabschnitt vollständig umschließt, kann durch diesen Aufbau sehr einfach und effizient eine dichte Verbindung hergestellt werden. Außerdem kann der Leitungsabschnitt zusammen mit den Heizdrähten in das Spritzgussteil mit eingebettet werden, sofern dieser Aufbau in der oben geschilderten Variante verwendet werden soll. Dann entsteht mit einem einzigen Arbeitsgang an einer Spritzgussmaschine ein Bauteil, welches alle der bisher genannten Varianten und Vorteile in sich vereint.

Wie oben bereits angedeutet, kann in einer weiteren sehr vorteilhaften Ausgestaltung der erfindungsgemäßen Vorrichtung das Leitungselement selbst ebenfalls elektrisch beheizt ausgebildet sein. Dabei kann es besonders sinnvoll und vorteilhaft sein, wenn die elektrische Beheizung sowohl des Leitungselements als auch des Verbindungsgehäuses so gestaltet ist, dass der im Bereich des Leitungsabschnitts verlaufende Heizdraht auch mit einem im Bereich des Leitungselements verlaufenden Heizdraht verbunden ist.

In einer sehr günstigen und vorteilhaften Weiterführung der Idee kann es dabei vorgesehen sein, dass die elektrischen Anschlüsse für den Heizdraht im Bereich des Verbindungsgehäuses nach außen geführt sind. Dies ermöglicht den elektrischen Anschluss des Heizdrahts im Bereich des Verbindungsgehäuses. Da dieses mit einer Komponente lösbar verbunden ist, ist dieses während des Betriebs eines mit der Vorrichtung ausgestatteten Systems im Allgemeinen an einem fest vorgegebenen Ort und wird anders als beispielsweise ein als Schlauch ausgebildetes Leitungselement sich typischerweise nicht durch Vibrationen und Ähnliches bewegen. Dadurch kann in diesem Bereich ein Anbringen der elektrischen Anschlusselemente vergleichsweise einfach, sicher und zuverlässig erfolgen, ohne dass diese durch fortwährende Bewegungen der Gefahr einer Beschädigung ausgesetzt sind.

Wie oben bereits erwähnt, löst auch ein Brennstoffzellensystem mit wenigstens einer Komponente die eingangs gestellte Aufgabe. Dieses erfindungsgemäße Brennstoffzellensystem sieht es dann vor, dass die wenigstens eine Komponente mittels einer Vorrichtung nach einer der bereits beschriebenen Ausgestaltungen mit einem Leitungselement verbunden ist. Wie bereits aus dem eingangs erwähnten Stand der Technik bekannt, ist es insbesondere bei Brennstoffzellensystemen, in denen Wasser als Produktwasser und zur Befeuchtung von Membranen in hochreiner Form anfällt beziehungsweise benötigt wird, besonders kritisch, wenn diese Systeme bei Temperaturen unterhalb des Gefrierpunkts betrieben werden. Da dies bei Fahrzeugen in vielen Regionen der Welt jedoch unvermeidbar ist, spielt die erfindungsgemäß ausgestaltete Vorrichtung bei derartigen Brennstoffzellensystemen eine besonders vorteilhafte Rolle.

Weitere vorteilhafte Ausgestaltungen der erfindungsgemäßen Vorrichtung ergeben sich ferner aus den restlichen abhängigen Unteransprüchen und werden anhand der Ausführungsbeispiele deutlich, welche nachfolgend unter Bezugnahme auf die Figuren näher erläutert werden.

Dabei zeigen:
Fig. 1 eine erste Ausführungsform der erfindungsgemäßen Vorrichtung; und
Fig. 2 eine zweite Ausführungsform der erfindungsgemäßen Vorrichtung.

Die erfindungsgemäße Vorrichtung soll nachfolgend anhand der beiden Figuren in zwei möglichen Ausführungsbeispielen beschrieben werden. Der Aufbau kann beispielsweise in Brennstoffzellensystemen, aber auch in allen anderen Systemen, in denen beheizte Leitungen über Schnittstellen mit Komponenten verbunden sind, eine Beheizung sicherstellen.

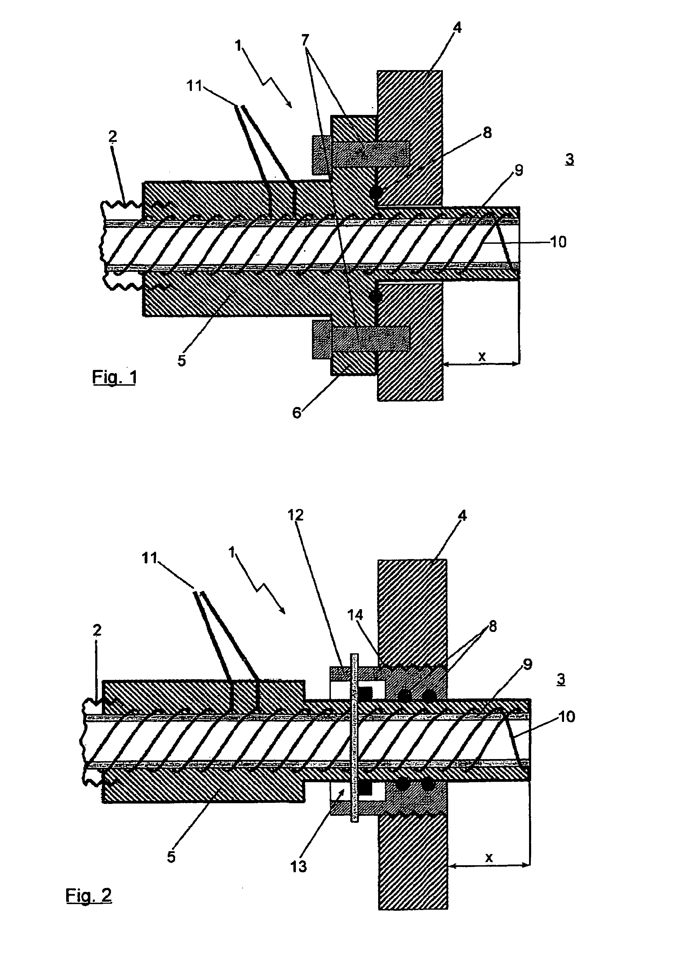

In der Darstellung der Figur 1 ist eine erste Ausführungsform der erfindungsgemäßen Vorrichtung 1 zum Verbinden eines Leitungselements 2 mit einer Komponente 3 zu erkennen. Das Leitungselement 2 ist dabei beispielhaft als Abschnitt eines Wellschlauchs dargestellt. Von der Komponente 3, wobei das Bezugszeichen 3 hier das Innere der Komponente 3 bezeichnet, ist in der Darstellung lediglich eine Wand 4 explizit dargestellt. Die Vorrichtung 1 weist ein Verbindungsgehäuse 5 auf. Dieses Verbindungsgehäuse 5 weist einen Flansch 6 auf, welcher über zwei Befestigungsschrauben 7 mit der Wand 4 der Komponente 3 verschraubt ist. Das Verbindungsgehäuse 5 ist damit lösbar mit der Komponente 3 verbunden. Zur Abdichtung ist im Bereich des Flanschs 6 ein Dichtungselement 8 in Form eines Dichtrings vorgesehen. Das Verbindungsgehäuse 5 kann beispielsweise aus einem Spritzgussmaterial ausgeführt sein. In dem hier dargestellten Ausführungsbeispiel ist das Leitungselement 2 dabei so in das Spritzgussmaterial des Verbindungsgehäuses 5 integriert, dass das Verbindungsgehäuse 5 fest und unlösbar mit dem Leitungselement 2 verbunden ist. Im Inneren des Leitungselements 2 findet sich dabei ein Leitungsabschnitt 9, welcher innerhalb des Verbindungsgehäuses 5 die Fortführung des Leitungselements 2 darstellt und in dem die transportierten Medien strömen können. Der Leitungsabschnitt 9 kann auch einstückig mit dem Leitungselement 2 ausgeführt sein, also sein eines Ende bilden. Dieser Leitungsabschnitt 9 ist dabei von einem Heizdraht 10 umgeben, welcher zur Beheizung zumindest des Leitungsabschnitts 9 dient. In dem dargestellten Ausführungsbeispiel ist der Heizdraht 9 dabei über zwei angedeutete elektrische Anschlusselemente 11 elektrisch kontaktiert. Diese elektrischen Anschlusselemente 11 können dabei im Bereich des typischerweise ortsfest verharrenden Verbindungsgehäuses 5 leicht und einfach kontaktiert werden. Im Bereich des Leitungselements 2, welches sowohl als starres als auch als flexibles Leitungselement ausgeführt sein kann, kann die Beheizung dann entsprechend fortgesetzt sein, beispielsweise in einer Art und Weise, wie dies aus dem Stand der Technik bekannt und üblich ist. Um zu verhindern, dass die elektrischen Anschlüsse, insbesondere wenn das Leitungselement 2 als Schlauch ausgebildet ist, ständigen Bewegungen ausgesetzt sind, kann ein hier nicht dargestellter Heizdraht im Bereich des Leitungselements 2 mit dem Heizdraht 10 im Bereich des Leitungsabschnitts 9 verbunden werden, sodass das gesamte Leitungselement 2 über die elektrischen Anschlusselemente 11 mit elektrischer Leistung zur Beheizung versorgt werden kann.

Das Spritzgussmaterial des Verbindungsgehäuses 5 umgibt, wie in der Darstellung der Figur 1 zu erkennen ist, dabei den Leitungsabschnitt 9 zusammen mit den um den Außenumfang des Leitungsabschnitts 9 gewickelten Heizdraht 10 und isoliert den Aufbau so nach außen. Wenn der Leitungsabschnitt 9 selbst ebenfalls aus einem elektrisch nicht leitenden Material ausgebildet ist, dann kann der Heizdraht 10 eingesetzt werden, ohne dass weitere Isolationsmaßnahmen oder dergleichen notwendig sind, da dieser dann zwischen dem Leitungsabschnitt 9 und dem Material des Verbindungsgehäuses 5 elektrisch isolierend und mechanisch geschützt sicher und zuverlässig in seiner Position gehalten wird.

In der Darstellung der Figur 1 ist außerdem zu erkennen, dass der Leitungsabschnitt 9 in Richtung des Innenraums der Komponente 3 so weit über das eigentliche Verbindungsgehäuse 5 beziehungsweise den Flansch 6 hinaussteht, dass dieser durch die Wand 4 der Komponente 3 hindurchragt und um einen gewissen, in der Darstellung der Figur 1 mit X bezeichneten Wegabschnitt, in das Innere der Komponente 3 hineinragt. Durch diesen besonderen Aufbau des Verbindungsgehäuses 5 mit dem elektrisch beheizten Leitungselement 9 wird nicht nur der Bereich der Leitung elektrisch beheizt, sondern insbesondere der vergleichsweise kritische Bereich an der Verbindungsstelle zwischen dem Leitungselement 2 und einer Komponente 3. Dadurch, dass der Leitungsabschnitt 9 in das Innere der Komponente 3 hineinragt, erfolgt die Beheizung sicher und zuverlässig, bis das über das Leitungselement 2 und den Leitungsabschnitt 9 geführte Medium das Innere der Komponente 3 erreicht hat. Der um den Betrag X nach innen ragende Leitungsabschnitt 9 kann außerdem sicherstellen, dass an der Innenseite der Wand 4 der Komponente 3 gegebenenfalls auskondensierende Flüssigkeit beim Herabrinnen an der Wand nicht in den Leitungsabschnitt 9 eindringt, sondern um diesen herum im Bereich der Innenfläche der Wand 4 abläuft. Dadurch wird eine sichere und zuverlässige Funktionalität sichergestellt. Aufgrund des vergleichsweise einfachen Aufbaus, welcher beispielsweise als Spritzgussteil an vorkonfektionierte und insbesondere beheizbare Leitungselemente 2 mit angebracht werden kann, kann bei entsprechend hoher Stückzahl der Verbindungsgehäuse 5 und einem geeigneten Spritzgusswerkzeug einfach, sicher und zuverlässig eine hohe Funktionalität des Aufbaus bei sehr geringen Kosten ermöglicht werden.

In der Darstellung der Figur 2 ist eine alternative Ausführungsform der erfindungsgemäßen Vorrichtung 1 zu erkennen. Der Aufbau ist dabei so ausgeführt, dass die Funktionalität im Wesentlichen dieselbe ist. Die mit denselben Bezugszeichen versehenen Bauteile entsprechen dabei den im Rahmen der Figur 1 beschriebenen Bauteilen. Der Unterschied zwischen den beiden Ausgestaltungen gemäß den Figuren 1 und 2 liegt darin, wie das Verbindungsgehäuse 5 im Bereich der Komponente 3 beziehungsweise ihrer Wand 4 befestigt wird. Anstelle der oben beschriebenen Befestigungsschrauben 7, welche mit dem Flansch 6 zusammenwirken, ist hier im Bereich der Wand 4 eine Aufnahme 12 vorgesehen. Im Bereich dieser Aufnahme 12 wird der Leitungsabschnitt 9 zusammen mit dem ihn umgebenden Material des Verbindungsgehäuses 5 über zwei radiale Dichtelemente 8 in Form einer doppelten Ringdichtung abgedichtet. Das Verbindungsgehäuse 5 ist dann über eine mechanische Verriegelung 13 so im Bereich der Aufnahme 12 gehalten, dass dieses eingesteckt und durch die mechanische Verriegelung 13 fixiert werden kann. Diese kann beispielsweise in Anlehnung an SAE J 2044 ausgeführt sein. Die Aufnahme 12 kann dabei beispielsweise durch ein Gewinde 14, wie in der Darstellung der Figur 2 angedeutet, im Bereich der Wand 4 der Komponente 3 aufgenommen werden. Alternative Ausgestaltungen mit einer in die Wand 4 eingeschweißten Aufnahme 12 oder einer mit der Wand 4 der Komponente 3 verklebten Aufnahme 12 wären selbstverständlich ebenso denkbar.

Ansonsten ist der Aufbau der Vorrichtung 1, wie sie in der Darstellung der Figur 2 zu erkennen ist, im Wesentlichen derselbe, da auch hier im Bereich des Verbindungsgehäuses 5 der Leitungsabschnitt 9 als beheizter Leitungsabschnitt von dem Heizdraht 10 umgeben ist und einen Medienstrom durch das Leitungselement 2 und den Leitungsabschnitt 9 bis in das Innere der Komponente 3 hinein beheizen oder auftauen kann.

## Patentansprüche

1. Vorrichtung zum Verbinden eines Leitungselements mit einer Komponente, wobei das Leitungselement in einem Verbindungsgehäuse endet oder mit einem solchen fest verbunden ist, und wobei zwischen dem Verbindungsgehäuse und der Komponente Mittel zur lösbaren Befestigung vorgesehen sind, wobei
ein im Verbindungsgehäuse (5) verlaufender Leitungsabschnitt (9) über einen elektrischen Heizdraht (10), welcher den Leitungsabschnitt (9) von außen umgibt, beheizt ist, **dadurch gekennzeichnet, dass** der beheizte Leitungsabschnitt (9) in Richtung der Komponente (3) so weit über den Bereich zur lösbaren Befestigung des Verbindungsgehäuses (5) an der Komponente (3) hinausragt, dass dieser in dem Innenraum der Komponente (3) endet.

2. Vorrichtung nach Anspruch 1,
**dadurch gekennzeichnet, dass**
das Material des Verbindungsgehäuses (5) den beheizten Leitungsabschnitt (9) und den Heizdraht (10) auf der gesamten Länge des Leitungsabschnitts (9) umschließt.

3. Vorrichtung nach Anspruch 1 oder 2,
**dadurch gekennzeichnet, dass**
das Verbindungsgehäuse (5) aus einem elektrisch nicht leitenden Material ausgebildet ist.

4. Vorrichtung nach Anspruch 1, 2 oder 3,
**dadurch gekennzeichnet, dass**
das Verbindungsgehäuse (5) einstückig mit dem Leitungselement (2) ausgebildet ist.

5. Vorrichtung nach einem der Ansprüche 1 bis 4,
**dadurch gekennzeichnet, dass**
das Verbindungsgehäuse (5) als Spritzgussteil ausgebildet ist, welches ein Ende des Leitungselements (2) und den Leitungsabschnitt (9) am Außenumfang umschließt.

6. Vorrichtung nach einem der Ansprüche 1 bis 5,
**dadurch gekennzeichnet, dass**
zwischen dem Verbindungsgehäuse (5) und der Komponente (3) Dichtungselemente (8) angeordnet sind.

7. Vorrichtung nach einem der Ansprüche 1 bis 6,
**dadurch gekennzeichnet dass**
das Verbindungsgehäuse (5) über einen Flansch (6) an einem Gehäuse der Komponente (3) befestigbar ist.

8. Vorrichtung nach einem der Ansprüche 1 bis 6,
**dadurch gekennzeichnet, dass**
das Verbindungsgehäuse (5) im Bereich des Gehäuses der Komponente (3) oder einer damit verbundenen Aufnahme (12) positioniert und über eine mechanische Verriegelung (13) gehalten ist.

9. Vorrichtung nach einem der Ansprüche 1 bis 8,
**dadurch gekennzeichnet, dass**
das Leitungselement (2) über einen Heizdraht elektrisch beheizt ausgebildet ist.

10. Vorrichtung nach einem der Ansprüche 1 bis 9,
**dadurch gekennzeichnet, dass**
elektrische Anschlusselemente (11) für den Heizdraht/die Heizdrähte (10) im Bereich des Verbindungsgehäuses (5) nach außen geführt sind.

11. Brennstoffzellensystem mit wenigstens einer Komponente (3), welche mittels einer Vorrichtung (1) nach einem der Ansprüche 1 bis 10 mit einem Leitungselement (2) verbunden ist.

## Claims

1. Device for connecting a line element to a component, wherein the line element terminates in a connection housing or is permanently connected thereto, and wherein means for releasable attachment are provided between the connection housing and the component, a line section (9) extending in the connection housing (5) being heated via an electric heating wire (10) which surrounds the line section (9) from the outside,
**characterised in that**
the heated line section (9) projects in the direction of the component (3) so far beyond the region for the releasable attachment of the connection housing (5) to the component (3) that it terminates in the interior of the component (3).

2. Device according to claim 1,
**characterised in that**
the material of the connection housing (5) encloses the heated line section (9) and the heating wire (10) along the entire length of the line section (9).

3. Device according to claim 1 or 2,
**characterised in that**
the connection housing (5) is made of an electrically non-conductive material.

4. Device according to claim 1, 2 or 3,
**characterised in that**
the connection housing (5) is designed in one piece with the line element (2).

5. Device according to any of claims 1 to 4,
**characterised in that**
the connection housing (5) is designed as an injection-moulded part which encloses an end of the line element (2) and the line section (9) on the outer circumference.

6. Device according to any of claims 1 to 5,
**characterised in that**
sealing elements (8) are placed between the connection housing (5) and the component (3).

7. Device according to any of claims 1 to 6,
**characterised in that**
the connection housing (5) can be secured to a housing of the component (3) via a flange (6).

8. Device according to any of claims 1 to 7,
**characterised in that**
the connection housing (5) is positioned in the region of the housing of the component (3) or of a receptacle (12) connected thereto and is held via a mechanical interlock (13).

9. Device according to any of claims 1 to 8,
**characterised in that**
the line element (2) is designed for electric heating via a heating wire.

10. Device according to any of claims 1 to 9,
**characterised in that**
electric connecting elements (11) for the heating wire(s) (10) are routed to the outside in the region of the connection housing (5).

11. Fuel cell system comprising at least one component (3) which is connected to a line element (2) by means of a device (1) according to any of claims 1 to 10.

## Revendications

1. Dispositif pour raccorder un élément de conduite à un composant, l'élément de conduite aboutissant dans un boîtier de raccordement ou étant relié à demeure à celui-ci et des éléments pour la fixation amovible étant disposés entre le boîtier de raccordement et le composant, un segment de conduite (9) s'étendant dans le boîtier de raccordement (5) étant chauffé au moyen d'un filament chauffant électrique (10), le filament chauffant (10) entoure le segment de conduite (9) par l'extérieur, **caractérisé en ce que** le segment de conduite (9) chauffé fait saillie en direction du composant (3), au-delà de la zone destiné à la fixation amovible du boîtier de raccordement (5) au composant (3), de manière à aboutir dans l'espace intérieur du composant (3).

2. Dispositif selon la revendication 1, **caractérisé en ce que** le matériau du boîtier de raccordement (5) enferme le segment de conduite (9) chauffé et le filament chauffant (10) sur toute la longueur du segment de conduite (9).

3. Dispositif selon la revendication 1 ou la revendication 2, **caractérisé en ce que** le boîtier de raccordement (5) est fabriqué dans un matériau électriquement non conducteur.

4. Dispositif selon la revendication 1, 2 ou la revendication 2, **caractérisé en ce que** le boîtier de raccordement (5) est conçu d'un seul tenant avec l'élément de conduite (2).

5. Dispositif selon l'une quelconque des revendications 1 à 4, **caractérisé en ce que** le boîtier de raccordement (5) est conçu en tant que pièce moulée par injection, laquelle enferme une extrémité de l'élément de conduite (2) et le segment de conduite (9) sur la périphérie extérieure.

6. Dispositif selon l'une quelconque des revendications 1 à 5, **caractérisé en ce qu'**entre le boîtier de raccordement (5) et le composant (3) sont disposés des éléments d'étanchéité (8).

7. Dispositif selon l'une quelconque des revendications 1 à 6, **caractérisé en ce que** le boîtier de raccordement (5) peut être fixé à l'aide d'une bride (6) sur un boîtier du composant (3).

8. Dispositif selon l'une quelconque des revendications 1 à 6, **caractérisé en ce que** le boîtier de raccordement (5) est positionné dans la zone du boîtier du composant (3) ou d'un logement (12) relié à celui-ci et est maintenu au moyen d'un verrouillage (13) mécanique.

9. Dispositif selon l'une quelconque des revendications 1 à 8, **caractérisé en ce que** l'élément de conduite (2) est conçu au-dessus d'un filament chauffant, chauffé électriquement.

10. Dispositif selon l'une quelconque des revendications 1 à 9, **caractérisé en ce que** des éléments de raccordement (11) électriques pour le filament chauffant / les filaments chauffants (10) sont dirigés vers l'extérieur dans la zone du boîtier de raccordement (5).

11. Système de cellule de combustible doté d'au moins un composant (3), lequel est relié au moyen d'un dispositif (1) selon l'une quelconque des revendications 1 à 10, à un élément de conduite (2).
